# EUROPÄISCHE PATENTSCHRIFT

(11) **EP 1 086 325 B1**
(45) Veröffentlichungstag und Bekanntmachung des Hinweises auf die Patenterteilung: **03.09.2003**
(21) Anmeldenummer: 99929220.4
(22) Anmeldetag: 15.06.1999
(51) Int. Cl.: F16G 13/16

(54) **KETTENGLIED FÜR ENERGIEFÜHRUNGSKETTEN**
CHAIN LINK FOR ENERGY SUPPLY CHAINS
CHAINON POUR CHAINES D'APPORT D'ENERGIE

(30) Priorität: 16.06.1998 DE 19826749
(43) Veröffentlichungstag der Anmeldung: 28.03.2001
(73) Patentinhaber: Murrplastik System-Technik GmbH, 71567 Oppenweiler (DE)
(72) Erfinder: EHMANN, Bruno, D-73563 Mögglingen (DE); FUNK, Rainer, D-71543 Wüstenrot (DE)
(74) Vertreter: Jeck, Anton, Dipl.-Ing.
(86) Internationale Anmeldenummer: EP9904131
(87) Internationale Veröffentlichungsnummer: WO99066228

(56) Entgegenhaltungen:
- EP-A- 0 277 389
- DE-A- 19 647 080
- DE-C- 3 516 448
- DE-C- 4 015 803

## Beschreibung

Die Erfindung betrifft ein Kettenglied für Energie-führungsketten nach dem Oberbegriff des Anspruchs 1.

Ein derartiges Kettenglied ist durch die auf die Anmelderin zurückgehende DE-A1-196 47 080 bekannt. Mit diesem Kettenglied wird eine funktionsgerechte Verbindung der Querstege mit den Seitenlaschen mit einfachen Mitteln ermöglicht und eine Beschädigung der Seitenlaschen im deckseitigen Bereich der Querstegaufnahme bei Belastung des Querstegs vermieden. Dabei wird eine gewisse Stabilität des Kettenglieds erreicht. Bei einer Ausführung gemäß dieser Schrift ist in der Ausnehmung der Seitenlasche eine mit der Seitenlasche einstückig verbundene und zum Kettengliedinneren gerichtete Feder vorgesehen, die an ihrem Ende eine Rastnase trägt. Der Quersteg wird mit seinem Ende in der Ausnehmung vertikal-bewegungssicher festgelegt und weist an seiner Unterseite eine Rastausnehmung auf, in die die Rastnase der Seitenlasche einrastet,so daß eine Horizontalbewegung des Querstegs nicht mehr möglich ist. Diese.Art der Verbindung zwischen Quersteg und Seitenlasche ist jedoch ziemlich aufwendig und spritztechnisch nicht einfach herszustellen.

Die Aufgabe der Erfindung besteht darin, ein Kettenglied der im Oberbegriff des Anspruchs 1 genannten Art zu schaffen, wobei die Stabilität des Kettenglieds erhöht wird und die Verbindungsmittel zwischen Quersteg und Seitenlaschen einfacher gestaltet sind.

Diese Aufgabe wird mit den Merkmalen des Anspruchs 1 gelöst.

Man erkennt, daß die Erfindung jedenfalls dann verwirklicht ist, wenn es sich um ein Kettenglied für Energieführungsketten handelt, das parallel zueinander verlaufende und mittels Querstegen miteinander verbindbare Laschen sowie Verbindungsmittel für die freien Enden mindestens eines Quersteges aufweist. Dabei sind diese Verbindungsmittel in bzw. an den Innenwänden der Seitenlaschen und als Ausnehmungen und Vorsprünge ausgebildet, die mit den Enden durch Stecken und/oder Einrasten verbindbar sind. Die Enden des Quersteges weisen jeweils eine plattenförmige, in Querstegrichtung verlaufende und einstückig mit dem Querstück verbundene Feder mit einer an ihrem Ende angeordneten Rastrippe auf. In den Seitenlaschen ist jeweils eine Mittelausnehmung mit einem auf der Innenseite der zugehörigen Seitenlasche angeordneten Raststeg zur Aufnahme der Feder vorgesehen. Durch diese Maßnahmen wird erreicht, daß nach Einstecken der Enden des Quersteges in die Ausnehmungen eine zusätzliche, nicht ohne weiteres lösbare Verbindung hergestellt wird, durch die sichergestellt wird, daß der Quersteg sich von den Laschen selbst dann nicht löst, wenn er erheblichen Kräften ausgesetzt ist.

Der Quersteg weist daher vorzugsweise an seinen beiden Enden nur eine einfache Feder zur Verhinderung seiner Horizontal-bewegung und zwei einfache Schenkel zur Verhinderung seiner Vertikalbewegung auf, während in den Schenkeln nur einfache Ausnehmungen gebildet sind.

Weitere zweckmäßige und vorteilhafte Ausgestaltungen der Erfindung gehen aus den Unteransprüchen hervor.
Gemäß einer zweckmäßigen weiteren Ausbildung der Erfindung ist die Rastrippe zur Deckseite der Seitenlasche und der Raststeg zum Kettengliedinneren gerichtet.

Gemäß einer weiteren Ausbildung der Erfindung setzen die Feder und die Seitenschenkel in halber Höhe des Querstegs an, wobei die Feder eine Endfläche des Querstegs freiläßt und die Seitenschenkel im Querschnitt etwa quadratisch ausgebildet und Anlageflächen des Querstegs auf jeweils zwei ihrer Seiten freilassen. Durch diese Flächen wird die Stabilität der Verbindung des Querstegs mit den Laschen gewährleistet.

Gemäß einer weiteren Ausbildung der Erfindung ist der Abstand zwischen der Rastrippe und der Endfläche größer als die Tiefe des Raststegs. Daher läßt sich in den so gebildeten Spalt ein Werkzeug, insbesondere ein Schraubenzieher, zur Demontage des Querstegs einführen.

Gemäß einer weiteren Ausbildung der Erfindung sind die unteren Querkanten der Schenkel abgerundet. Dadurch lassen sich die Schenkel des Querstegs besser in die Seitenausnehmungen der Seitenlaschen einführen.

Gemäß einer weiteren Ausbildung der Erfindung sind die an einer Seite der Seitenlaschen angeordneten Querstege ein-stückig mit diesen Seitenlaschen verbunden. Daher brauchen nur auf der anderen Seite der Seitenlaschen einsetzbare Querstege vorgesehen zu werden. Diese auf der einen Seite fest mit den Seitenlaschen verbundenen Querstege tragen zur Stabilitäts-erhöhung des Kettenglieds bei.

Die Erfindung wird nun anhand eines Ausführungsbeispiels näher erläutert. Es zeigen:
- Fig. 1 und 2: Querschnitte durch das Kettenglied gemäß der Erfindung, wobei in diesen Figuren das Einsetzen eines Querstegs dargestellt wird,
- Fig. 3: einen sehr vergrößerten Querschnitt durch einen Teil eines Kettenglieds gemäß der Fig. 2,
- Fig. 4: eine verkleinerte Teilansicht der in Fig. 3 dargestellten Seitenlasche in Richtung der dort dargestellten Pfeile IV mit Ausnehmungen zur Aufnahme des in Fig. 5 dargestellten Querstegs,
- Fig. 5: eine vergrößerte Draufsicht auf den oben in Fig. 2 dargestellten Quersteg und
- Fig. 6: einen Querschnitt durch den Quersteg längs der Linie VI-VI in Fig. 5.

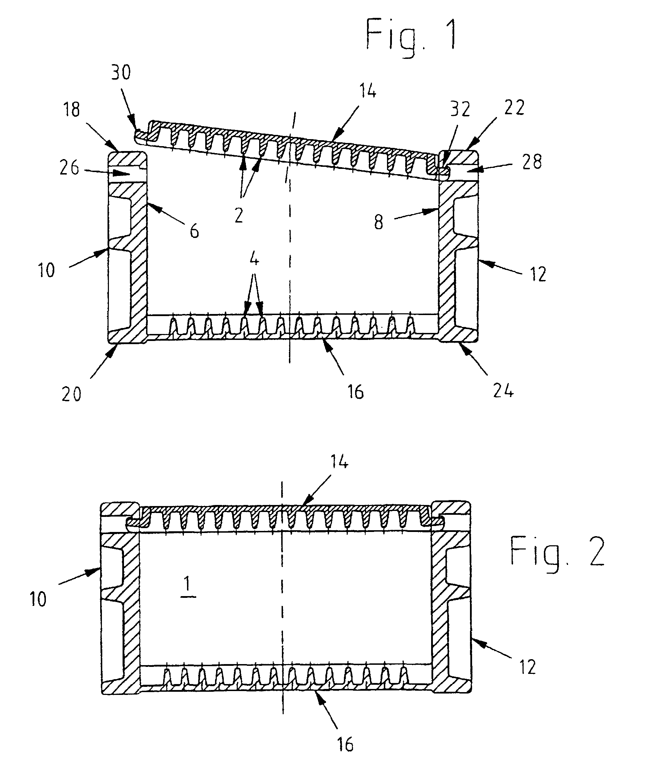

Das in den Figuren 1 bis 6 dargestellte Kettenglied ist für Energieführungsketten zur Aufnahme von Schläuchen, Kabeln oder dergleichen vorgesehen. Eine derartige Energieführungskette ist für die Zufuhr von Verbrauchsmitteln aller Art durch Lei-tungen von einem festen Anschluß zu einem beweglichen Verbraucher vorgesehen. Dabei sind die Leitungen in durch-gehenden Innenräumen 1 des jeweiligen Kettenglieds angeordnet. Das Kettenglied besteht allgemein aus zwei Seitenlaschen (Kettenlaschen) mit zwei Querstegen.

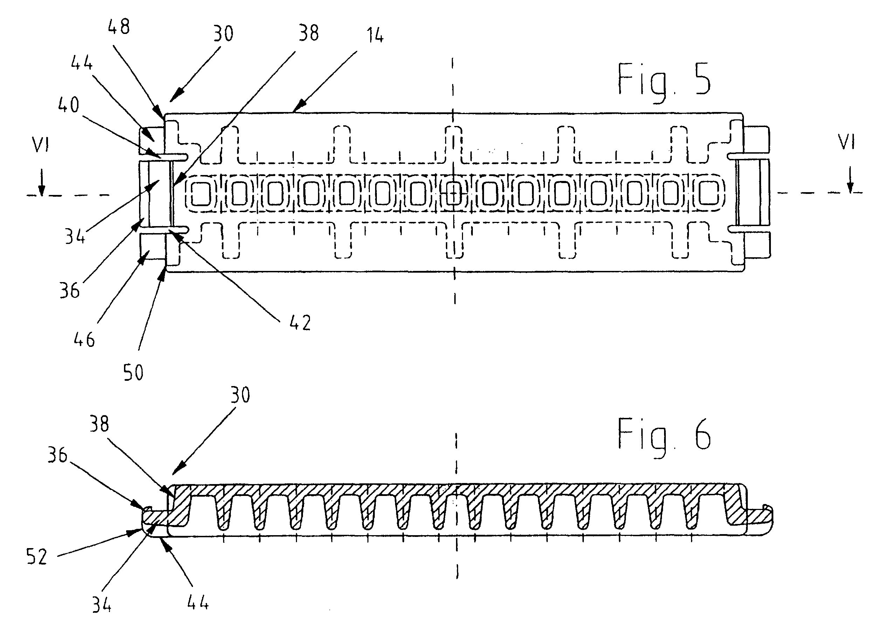

Im vorliegenden Ausführungsbeispiel weist das Kettenglied zwei parallel zueinander verlaufende und mittels Querstegen 14, 16 miteinander verbindbare Seitenlaschen 10, 12 auf. Die Seiten-laschen 10, 12 haben parallel zu den Querstegen verlaufende Deck- und Bodenseiten 18, 20 bzw. 22, 24 sowie Aufnahmen 26, 28 für die freien Enden 30, 32 des Querstegs 14, wobei diese Aufnahmen in den Innenwänden 6, 8 der Seitenlaschen 10, 12 ausgebildet sind. Der untere Quersteg 16 ist mit den Seitenlaschen 10, 12 einstückig verbunden. Die Seitenlaschen 10, 12 und die Querstege 14, 16 definieren den Innenraum 1 des Kettengliedes. Die Querstege 14, 16 weisen eine Anzahl von Rippen 2 bzw. 4 auf, die in den Innenraum 1 weisen, gleich-mäßig über die Länge dieser Querstege verteilt sind und in Querstegquerrichtung eine geringe Länge aufweisen, wie aus Fig. 5 hervorgeht. Diese Rippen dienen zum Halten von nicht dargestellten Zwischenwänden, die eine Trennung der verschie-denen Leitungen und Kabel ermöglichen. Alle Teile des Ketten-glieds sind aus Kunststoff hergestellt.

Im folgenden wird nur die Ausbildung des linken Endes 30 des Querstegs 14 und der Aufnahme 26 der Seitenlasche 10 beschrie-ben. Das rechte Ende 32 des Quersteges 14 und die Aufnahme 28 der Seitenlasche 12 sind wie das linke Ende 30 und die Aufnahme 26 ausgebildet.

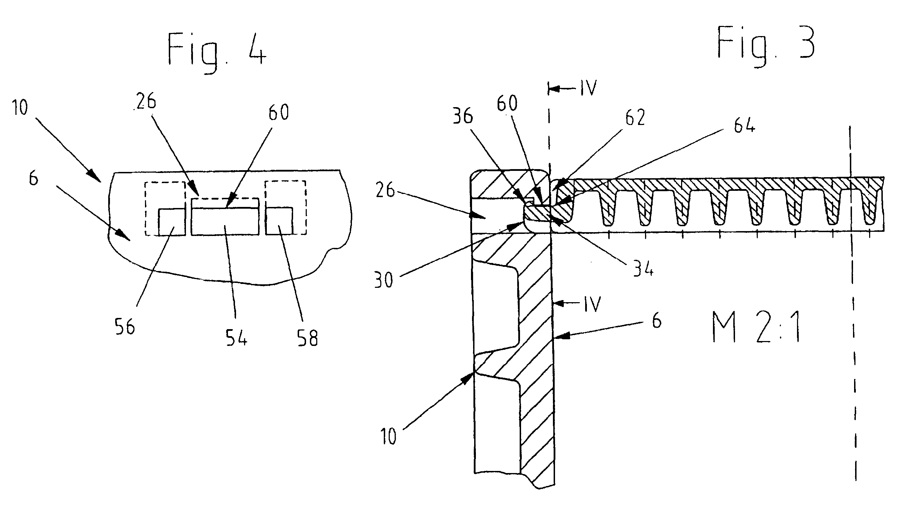

Die Ausbildung des Endes 30 des Querstegs 14 ist besonders deutlich aus den Figuren 3, 5 und 6 erkennbar, während die Ausbildung der Ausnehmung 26 der Seitenlasche 10 besonders deutlich den Figuren 3 und 4 zu entnehmen ist.

Das Ende 30 weist eine plattenförmige Feder 34 auf, die einstückig mit dem Quersteg 14 verbunden ist, dabei einem mittleren Endbereich des Querstegs 14 entspringt, in Querstegrichtung verläuft und am Ende eine über die ganze Breite der Feder 34 verlaufende, nach oben weisende Rastrippe 36 hat. Die Feder 34 ist soweit elastisch, daß sie sich begrenzt nach unten auslenken läßt. Die Feder 34 läßt dabei eine End- oder Schrägfläche 38 des Querstegs 14 frei. Zu beiden Seiten der Feder 34 ist, jeweils durch einen Spalt 40 bzw. 42 getrennt, jeweils ein Schenkel 44 bzw. 46 mit der Länge der Feder 34 einstückig mit dem Quersteg 14 verbunden, wobei diese Schenkel in Verlängerung der Unterseite des Querstegs 14 verlaufen, etwa die halbe Höhe der Quersteghöhe aufweisen und dabei eine senkrecht zur Quersteglängsrichtung stehende Anlagefläche 48 bzw. 50 des Querstegs 14 freilassen, die den entsprechenden Schenkel auf zwei Seiten umgibt, und einen etwa quadratischen Querschnitt haben. Die Gegenflächen auf der Innenseite 6 der Seitenlasche 10 für diese Anlageflächen 48, 50 sind in Fig. 4 durch gepunktete Linien angedeutet. Die Schenkel 44, 46 sind an ihrer unteren Querkante 52 (Fig. 6) abgerundet.

Die in den Figuren 3 und 4 dargestellte Ausnehmung 26 ist aus spritztechnischenn Gründen durchgehend durch die Seitenlasche 10 ausgebildet. Die Ausnehmung 26 wird durch eine im Quer-schnitt rechteckige Mittelausnehmung 54 und zwei seitlich der Mittelausnehmung angeordnete, im Querschnitt etwa quadratische Seitenausnehmungen 56, 58 gebildet. Die Breite der Mittel-ausnehmung ist an die Breite der Feder 34 angepaßt. An der Innenseite 6 der Seitenlasche 10 ist in der Mittelausnehmung 54 ein nach unten weisender Raststeg 60 gebildet, dessen Tiefe geringer als der Abstand der Rastrippe 36 von der Schrägfläche 38 ist. Die durch die Rastrippe 36 freigelassene Höhe der Mittelausnehmung 54 ist größer als die Summe der Stärke der Feder 34 und der Höhe der Rastrippe 36.

Die Seitenausnehmungen sind an die Schenkel 44, 46 des Quer-stegs 14 angepaßt.

Das Einsetzen des Querstegs 14 in das Kettenglied ist in den Figuren 1 und 2 angedeutet. Zunächst wird das eine Ende, hier das rechte Ende 32, des Querstegs 14 in die eine Ausnehmung, hier die Ausnehmung 28, der Querlasche 12 eingesetzt. Das Kettenglied ist soweit flexibel, daß es sich oben auseinanderbiegen läßt, um dann das andere Ende des Querstegs 14 in die zugehörige Ausnehmung einzuführen. Danach greift, wie analog am anderen Querstegende auch, die Rastrippe 36 hinter den Raststeg 60, während die Seitenschenkel in den Seitenaus-nehmungen 56, 58 liegen und die Anlageflächen 48, 50 an der Innenseite 6 der Seitenlasche 10 anliegen (gepunktete Linien in Fig. 4). Dadurch wird ein sehr stabiler und sicherer Verbund des Querstegs 14 mit den Seitenlaschen 10, 12 bei einfacher Ausführung der Querstegenden und der Seitenlaschenausnehmungen hergestellt.

Zum Entfernen des Querstegs 14 aus dem Kettenglied dient der zwischen der Schrägfläche 38 und der Innenfläche 6 freiblei-bende Spalt 62 (Fig. 3), in den ein Schraubenzieher eingeführt werden kann. Mit diesem Schraubenzieher wird die Feder 34 an der Stelle 64 nach untern gedrückt, so daß der Eingriff der Rastrippe 36 hinter den Raststeg 60 gelöst und das Ende 30 aus der Ausnehmung 26 gezogen werden kann.

Abweichend vom dargestellten Ausführungsbeispiel können die Zwischenwände zwischen der Mittelausnehmung 54 und den Seitenausnehmungen 56, 58 auch wegfallen, wobei die Stabilität des Kettenglieds etwas geringer sein dürfte, aber die Herstellung der Ausnehmungen einfacher ist. Ferner kann abweichend auch der untere Quersteg 16 wie der obere Quersteg 14 ausgebildet sein.

## Patentansprüche

1. Kettenglied für Energieführungsketten mit parallel zueinander verlaufenden und mittels Querstegen (14) miteinander verbindbaren Laschen (10, 12) sowie mit Verbindungsmitteln (26, 60) für die freien Enden (30, 32) mindestens eines Querstegs (14), wobei diese Verbindungs-mittel in bzw. an den Innenwänden (6, 8) der Seiten-laschen (10, 12) und als Ausnehmungen und Vorsprünge ausgebildet sind, die mit den Enden (30, 32) durch Stecken und Einrasten verbindbar sind,
**dadurch gekennzeichnet,**
**daß** mindestens ein Ende (30,32) des Querstegs eine in Querstegrichtung verlaufende und mit dem Quersteg (14) verbundene Feder (34) mit einer an ihrem Ende angeordneten Rastrippe (36) aufweist und
**daß** in mindestens einer Seitenlasche (10,12) eine Mittelausnehmung (54) mit einem auf der Innenseite (6) der zugehörigen Seitenlasche (10) angeordneten Raststeg (60) zur Aufnahme der in Quersteganerrichtung wirkenden Feder (34) vorgesehen ist.

2. , Kettenglied nach Anspruch 1,
**dadurch gekennzeichnet,**
**daß** zwei zu beiden Seiten der Feder (34) angeordnete, von
der Feder (34) getrennte Schenkel (44, 46) und zwei seitlich zur Mittelausnehmung angeordnete Seitenaus-nehmungen (56, 58) zur paßgenauen Aufnahme der Schenkel (44, 46) vorgesehen sind.

3. Kettenglied nach Anspruch 1 oder 2,
**dadurch gekennzeichnet,**
**daß** die Rastrippe (36) zur Deckseite (18) der Seitenlasche (10) und der Raststeg (60) zum Ketten-gliedinneren (1) gerichtet ist.

4. Kettenglied nach Anspruch 3,
**dadurch gekennzeichnet,**
**daß** die Feder (34) und die Seitenschenkel (44, 46) in halber Höhe des Querstegs (14) ansetzen, wobei die Feder (34) eine Endfläche (38) des Querstegs (14) freiläßt und die Seitenschenkel (44, 46) im Querschnitt etwa quadratisch ausgebildet sind und Anlageflächen (48, 50) des Querstegs (14) auf jeweils zwei ihrer Seiten freilassen.

5. Kettenglied nach Anspruch 4,
**dadurch gekennzeichnet,**
**daß** der Abstand zwischen der Rastrippe (36) und der Endfläche (38) größer als die Tiefe des Raststegs (60) ist.

6. Kettenglied nach Anspruch 5,
**dadurch gekennzeichnet,**
**daß** die unteren Querkanten (52) der Schenkel (44, 46) abgerundet sind.

7. Kettenglied nach einem der Ansprüche 1 bis 6,
**dadurch gekennzeichnet,**
**daß** die an einer Seite der Seitenfaschen (10, 12) ange-ordneten Querstege (16) einstückig mit diesen Seiten-laschen verbunden sind.

## Claims

1. Chain link for power transmitting chains, having bars (10, 12), which extend parallel to each other and are interconnectable by means of transverse webs (14), as well as having connecting means (26, 60) for the free ends (30, 32) of at least one transverse web (14), these connecting means being provided in or respectively on the internal walls (6, 8) of the sidebars (10, 12) and being in the form of recesses and projections, which are connectable to the ends (30, 32) by inserting and locking-in operations, **characterised in that** at least one end (30, 32) of the transverse web has a spring (34), which extends in the direction of the transverse web and is connected to the transverse web (14), said spring having a locking rib (36) disposed at its end, and **in that** a central recess (54) is provided in at least one sidebar (10, 12) and has a locking web (60), which is disposed on the internal surface (6) of the associated sidebar (10), to accommodate the spring (34) which acts in the transverse direction of the transverse web.

2. Chain link according to claim 1, **characterised in that** two portions (44, 46), which are disposed on both sides of the spring (34) and are separated from the spring (34), and two lateral recesses (56, 58), which are disposed laterally relative to the central recess, are provided in order to accommodate the portions (44, 46) with an accurate fitting.

3. Chain link according to claim 1 or 2, **characterised in that** the locking rib (36) is directed towards the top side (18) of the sidebar (10), and the locking web (60) is directed towards the chain link interior (1).

4. Chain link according to claim 3, **characterised in that** the spring (34) and the lateral portions (44, 46) are attached half-way up the transverse web (14), the spring (34) leaving free an end face (38) of the transverse web (14), and the lateral portions (44, 46) having a substantially square cross-section and leaving free abutment faces (48, 50) of the transverse web (14) on two of its respective sides.

5. Chain link according to claim 4, **characterised in that** the spacing between the locking rib (36) and the end face (38) is greater than the depth of the locking web (60).

6. Chain link according to claim 5, **characterised in that** the lower transverse edges (52) of the portions (44, 46) are rounded.

7. Chain link according to one of claims 1 to 6, **characterised in that** the transverse webs (16), which are disposed on one side of the sidebars (10, 12), are integrally connected to these sidebars.

## Revendications

1. Chaînon pour chaînes de commande d'énergie avec des mailles de chaîne (10, 12) disposées parallèlement les unes aux autres et pouvant être reliées entre elles au moyen d'entretoises (14) ainsi qu'avec des moyens de liaison (26, 60) pour les extrémités libres (30, 32) au moins d'une entretoise (14), moyennant quoi ces moyens de liaison sont formés dans et/ou au niveau des parois internes (6, 8) des mailles de chaîne latérales (10, 12) et sous forme de creux et de parties saillantes, qui peuvent être reliées aux extrémités (30, 32) par des fiches et des encoches,
**caractérisé en ce que**
au moins une extrémité (30, 32) de l'entretoise présente une languette (34) disposée dans le sens de l'entretoise et reliée à l'entretoise (14) avec une nervure d'arrêt (36) à son extrémité et
**en ce qu'**un creux central (54) est prévu dans au moins une maille de chaîne latérale (10, 12) avec une entretoise d'arrêt (60) disposée sur la face intérieure (6) de la maille de chaîne latérale (10) correspondante pour introduire la languette (34) agissant dans le sens transversal de l'entretoise.

2. Chaînon selon la revendication 1,
**caractérisé en ce que**
deux montants (44, 46) séparés de la languette (34) sont prévus des deux côtés de la languette (34) et deux creux latéraux (56, 58) disposés de chaque côté du creux central sont prévus pour introduire le montant de façon ajustée (44, 46).

3. Chaînon selon l'une quelconque des revendications 1 ou 2,
**caractérisé en ce que**
la nervure d'arrêt (36) est dirigée vers le côté de recouvrement (18) de la maille de chaîne latérale (10) et de l'entretoise d'arrêt (60) vers l'intérieur du chaînon (1).

4. Chaînon selon la revendication 3,
**caractérisé en ce que**
la languette (34) et le montant latéral (44, 46) sont disposés à mi-hauteur de l'entretoise (14), moyennant quoi la languette (34) laisse libre une surface d'extrémité (38) de l'entretoise (14) et les montants latéraux (44, 46) sont formés de façon à peu près quadratique dans la transversale et laissent libres les surfaces d'installation (48, 50) de l'entretoise (14) de chaque côté.

5. Chaînon selon la revendication 4,
**caractérisé en ce que**
l' écart entre la nervure d'arrêt (36) et la surface d'extrémité (38) est supérieur à la profondeur de l'entretoise d'arrêt (60).

6. Chaînon selon la revendication 5,
**caractérisé en ce que**
les arêtes transversales inférieures (52) des montants (44, 46) sont arrondies.

7. Chaînon selon l'une quelconque des revendications 1 à 6,
**caractérisé en ce que**
les entretoises (16) disposées au niveau d'un côté des mailles de chaîne latérales (10, 12) sont reliées en un bloc avec ces mailles de chaîne latérales.
